# EUROPÄISCHE PATENTSCHRIFT

(11) **EP 3 758 884 B1**
(45) Veröffentlichungstag und Bekanntmachung des Hinweises auf die Patenterteilung: **06.04.2022**
(21) Anmeldenummer: 19710614.9
(22) Anmeldetag: 26.02.2019
(51) Int. Cl.: B23K 26/08

(54) **VORRICHTUNG UND VERFAHREN ZUM BEARBEITEN EINES WERKSTÜCKS MITTELS EINES LASERSTRAHLS**
DEVICE AND METHOD FOR MACHINING A WORKPIECE BY MEANS OF A LASER BEAM
DISPOSITIF ET PROCÉDÉ SERVANT À USINER UNE PIÈCE AU MOYEN D'UN FAISCEAU LASER

(30) Priorität: 28.02.2018 DE 102018001570
(43) Veröffentlichungstag der Anmeldung: 06.01.2021
(73) Patentinhaber: VOLLMER WERKE Maschinenfabrik GmbH, 88400 Biberach/Riss (DE)
(72) Erfinder: ENGSTLER, Mathias, 88433 Schemmerhofen (DE); GRUSCHKA, Gerhard, 88400 Biberach (DE); HAUGER, Arndt, 72175 Dornhan (DE); MAYR, Benjamin, 88487 Mietingen (DE); SAEGMUELLER, Manfred, 88444 Ummendorf (DE); STROBEL, Martin, 73033 Goeppingen (DE)
(74) Vertreter: Thum, Bernhard
(86) Internationale Anmeldenummer: PCT/EP2019/054716
(87) Internationale Veröffentlichungsnummer: WO 2019/166425

(56) Entgegenhaltungen:
- WO-A1-2019/052858
- DE-A1-102012 111 771
- DE-A1-102014 109 613
- KR-A- 20140 123 192

## Beschreibung

Die Erfindung betrifft eine Vorrichtung und ein Verfahren zum Bearbeiten eines Werkstücks mittels eines hochenergetischen Bearbeitungsstrahls, insbesondere eines mit Schneiden besetzten Werkstücks mittels eines Laserstrahls. Die Vorrichtung umfasst eine Basis, einen Werkstückträger mit einer Aufnahmeeinrichtung zum Aufnehmen des Werkstücks, wobei die Aufnahmeeinrichtung mit dem darin aufgenommenen Werkstück um eine erste Rotationsachse der Aufnahmeeinrichtung drehbar ist. Die erste Rotationsachse, um die die Aufnahmeeinrichtung und das davon aufgenommene Werkstück drehbar sind, kann gleichzeitig einer Rotationsachse des Werkstücks und/oder einer Längsachse des Werkstückträgers entsprechen. Ferner umfasst die Vorrichtung eine Bearbeitungseinrichtung mit einer Bearbeitungsstrahlquelle, d.h. einem Strahlerzeuger, zum Erzeugen des hochenergetischen Bearbeitungsstrahls und einer Fokussiereinrichtung, um den hochenergetischen Bearbeitungsstrahl in einem Brennpunkt zu fokussieren.

Derartige Vorrichtungen sind aus dem Stand der Technik bekannt und werden beispielsweise zum Erzeugen und/oder Wiederherstellen von Frei- und/oder Spanflächen an Werkstücken verwendet. Insbesondere dienen solche Vorrichtungen zur Herstellung von Schneiden an Schneidwerkzeugen. Bei einer solchen Bearbeitung von Werkstücken besteht eine Herausforderung darin, eine geeignete Relativbewegung zwischen dem Werkstück und dem hochenergetischen Bearbeitungsstrahl zu ermöglichen, die eine präzise Bearbeitung des Werkstücks sicherstellt.

In diesem Zusammenhang offenbart das Dokument DE 299 08 585 U1 eine Vorrichtung zur Schneidkantenbearbeitung von Werkstücken aus diamanthaltigen Werkstoffen. Die Vorrichtung umfasst eine Antriebseinheit, die einen Laser und/oder eine Werkstückhalterung zum Bearbeiten des Werkstücks in Richtung und quer zu einer optischen Achse eines Laserstrahls verlagert.

Ferner offenbart das Dokument DE 10 2011 000 768 A1 eine Laserbearbeitungsvorrichtung mit einem Haltemittel und einer Laseranordnung. Die Laseranordnung umfasst einen ersten und einen zweiten Laserkopf, die jeweils in unterschiedlichen Betriebsmodi zum Bearbeiten eines von dem Haltemittel gehaltenen Werkstücks verwendet werden. Die Vorrichtung umfasst ferner eine Mehrzahl von Zustellachsen, um das Haltemittel relativ zu dem ersten und relativ zu dem zweiten Laserkopf zu positionieren und zu bewegen.

Aus dem Dokument DE 10 2011 078 825 A1 sind ein Verfahren und eine Laserbearbeitungsmaschine zum Bearbeiten eines Werkstücks bekannt. Die Laserbearbeitungsmaschine umfasst einen Werkstücktisch zum Halten des Werkstücks und ein Laserwerkzeug zum Führen eines Laserstrahls, um schichtweise Material des Werkstücks abzutragen. Eine Steuerung der Laserbearbeitungsmaschine ist dazu eingerichtet, in einer ersten Abtragphase den Laserstrahl durch Ansteuern einstellbarer Spiegel relativ zu dem Werkstück über die Werkstückoberfläche zu führen. Ferner ist die Steuerung der Laserbearbeitungsmaschine dazu eingerichtet, in einer zweiten Abtragphase den Laserstrahl durch Ansteuern einer oder mehrerer mechanischer Stellachsen relativ zu dem Werkstück über die Werkstückoberfläche zu führen, wobei die Stellachsen zur translatorischen und rotatorischen Einstellung der relativen Lage von Werkstück und Laserwerkzeug zueinander dienen.

Das Dokument DE 10 2012 111 771 A1 betrifft ein Verfahren und eine Laserbearbeitungsvorrichtung zum Bearbeiten eines Werkstücks. Die Laserbearbeitungsvorrichtung umfasst einen Laser zum Erzeugen eines Laserstrahls und eine ansteuerbare Ablenkeinrichtung, die den Laserstrahl während des Werkstückbearbeitens in wenigstens zwei Raumrichtungen ablenkt und den abgelenkten Laserstrahl auf dem Werkstück entlang einer Spiralbahn bewegt. Die Laserbearbeitungsvorrichtung weist zudem eine Positionieranordnung auf, um das Werkstück und die Ablenkeinrichtung relativ zueinander zu positionieren und/oder zu bewegen.

Ferner offenbart das Dokument EP 2 301 706 A2 eine Laserbearbeitungsvorrichtung zum Bearbeiten eines beliebigen dreidimensionalen Werkstücks. Die Laserbearbeitungsvorrichtung weist drei orthogonale Achsen und zwei Rotationsachten auf, entlang derer bzw. um die ein Laserbearbeitungskopf und das Werkstück verlagerbar sind, um einen Zugang zu allen Bereichen des zu bearbeitenden Werkstücks zu ermöglichen. Eine weitere Vorrichtung zur Behandlung eines Werkstücks mittels eines hochenergetischen Bearbeitungsstrahls sowie ein entsprechendes Bearbeitungsverfahren offenbart die KR 2014 0123192 A (Basis für den Oberbegriff der Ansprüche 1 und 12).

Die den bekannten Laserbearbeitungsvorrichtungen zugrundeliegenden Funktionsprinzipien bezüglich der Relativverlagerung des Werkstücks und des Bearbeitungsstrahls zueinander weisen jedoch eine vergleichsweise hohe Komplexität auf, wodurch die Ansteuerung der Vorrichtungskomponenten erschwert und die Bearbeitungspräzision beeinträchtigt werden kann.

Es ist daher eine Aufgabe der vorliegenden Erfindung, eine Vorrichtung und ein Verfahren der eingangs genannten Art bereitzustellen, die eine verbesserte Bearbeitungsqualität sicherstellen.

Diese Aufgabe wird gelöst durch eine Vorrichtung mit den Merkmalen des Anspruchs 1 und ein Verfahren mit den Merkmalen des Anspruchs 12.

Bevorzugte Ausführungsformen werden aus den Unteransprüchen 2 bis 11 und aus der nachfolgenden Beschreibung ersichtlich.

Erfindungsgemäß ist eine Vorrichtung der eingangs genannten Art vorgesehen, bei der der Werkstückträger auf einer Schlittenanordnung mit wenigstens einem Linearschlitten angeordnet ist, wobei der Werkstückträger über die Schlittenanordnung relativ zur Basis entlang wenigstens einer dem Linearschlitten zugeordneten Linearachse verlagerbar ist, dass weiter der Werkstückträger mit der diesem zugeordneten Schlittenanordnung und die Bearbeitungseinrichtung relativ zueinander um eine zweite Rotationsachse drehbar sind, die quer zu der ersten Rotationsachse und quer zu einer optischen Achse des hochenergetischen Bearbeitungsstrahls verläuft. Die Vorrichtung ist ferner dazu eingerichtet, in Abhängigkeit voneinander die Aufnahmeeinrichtung derart um die erste Rotationsachse zu drehen und/oder den Werkstückträger derart um die zweite Rotationsachse zu drehen und/oder die Bearbeitungseinrichtung derart um die zweite Rotationsachse zu drehen, dass während des Bearbeitens eine aktuelle Bearbeitungsposition, in der sich der Brennpunkt des hochenergetischen Bearbeitungsstrahls auf oder in unmittelbarer Nähe zu einer zu bearbeitenden Oberfläche des Werkstücks befindet, auf oder in unmittelbarer Nähe zu der zweiten Rotationsachse liegt. Die zu bearbeitende Oberfläche des Werkstücks kann insbesondere eine Oberfläche einer Schneide eines Werkzeugs sein.

Mit anderen Worten ist die Kinematik der erfindungsgemäßen Vorrichtung derart ausgebildet, dass während des Bearbeitens der gewünschten Oberfläche des Werkstücks erfindungsgemäß auch der Brennpunkt des hochenergetischen Bearbeitungsstrahls auf oder in unmittelbarer Nähe zu der zweiten Rotationsachse liegt.

Es versteht sich, dass das Drehen des die Aufnahmeeinrichtung umfassenden Werkstückträgers um die zweite Rotationsachse ein entsprechendes Drehen der Aufnahmeeinrichtung um die zweite Rotationsachse bewirkt. Gleichermaßen bewirkt das Drehen der Aufnahmeeinrichtung um die erste Rotationsachse und das Drehen des die Aufnahmeeinrichtung umfassenden Werkstückträgers um die zweite Rotationsachse gleichzeitig ein entsprechendes Drehen des von der Aufnahmeeinrichtung aufgenommenen Werkstücks um die erste bzw. um die zweite Rotationsachse.

Die Erfinder der vorliegenden Erfindung haben erkannt, dass es gegenüber herkömmlichen Laserbearbeitungsvorrichtungen vorteilhaft ist, bei denen eine aktuelle Bearbeitungsposition aufgrund einer freien Relativbewegung zwischen Werkstück und Laserstrahl entlang von wenigstens drei translatorischen und um wenigstens zwei rotatorische Stellachsen nahezu beliebig im Raum angeordnet sein kann, die aktuelle Bearbeitung an dem Werkstück auf oder in unmittelbarer Nähe zu der zweiten Rotationsachse durchzuführen. Hierdurch kann die Anzahl von Freiheitsgraden reduziert werden, die während des Bearbeitens zu berücksichtigen und anzusteuern sind. Dies kann eine vereinfachte und genauere Bewegungserzeugung zwischen Werkstück und hochenergetischem Bearbeitungsstrahl ermöglichen, wodurch eine verbesserte Bearbeitungsqualität erreicht wird. Als Ergebnis kann eine bleibende Fokussierung des Bearbeitungsstrahls auf die zu bearbeitende Oberfläche des Werkstücks besser aufrechterhalten werden.

Auch kann bei einer solchen erfindungsgemäßen Vorrichtung in bestimmten Ausführungsformen auf zusätzliche bewegbare Umlenkspiegel zum Verlagern des hochenergetischen Bearbeitungsstrahls verzichtet werden.

Ferner kann die erfindungsgemäße Vorrichtung in bestimmten Ausführungsformen ermöglichen, dass beispielsweise im Falle einer Bearbeitung von großen Konturänderungen am Werkstück, z.B. einem Radiuswerkzeug, im Wesentlichen nur eine Bewegung der Aufnahmeeinrichtung und/oder der Bearbeitungseinrichtung und/oder des Werkstückträgers um die erste und die zweite Rotationsachse ausgeführt werden muss, während auf eine Verlagerung entlang von Translationsachsen verzichtet werden kann. Hierdurch kann eine hohe Kontur- und Bearbeitungsqualität erreicht werden.

Des Weiteren kann bei der erfindungsgemäßen Vorrichtung in bestimmten Ausführungsformen auf sonstige bewegbare Strahlführungskomponenten verzichtet werden, da insbesondere ein Nachstellen des Brennpunkts des hochenergetischen Bearbeitungsstrahls, der erfindungsgemäß auf oder in unmittelbarer Nähe zu der zweiten Rotationsachse liegt, während des Bearbeitens nicht erforderlich ist.

In einer Ausführungsform der Erfindung kann durch die voneinander abhängige Verlagerung der Aufnahmeeinrichtung und/oder des Werkstückträgers und/oder der Bearbeitungseinrichtung die aktuelle Bearbeitungsposition bzw. der Brennpunkt des hochenergetischen Bearbeitungsstrahls stets auf oder in unmittelbarer Nähe zu der zweiten Rotationsachse liegen.

Die Basis kann auf einem Untergrund positionierbar und gegenüber diesem abstützbar sein. Ferner können zumindest der Werkstückträger, die Aufnahmeeinrichtung und die Bearbeitungseinrichtung derart benachbart zu einer Fläche einer Oberseite der Basis an der Basis angeordnet sein, dass sie durch die Basis von dem Untergrund beabstandet sind. Ferner kann sich die zweite Rotationsachse senkrecht zu der Fläche der Oberseite der Basis erstrecken. Gemäß einer Weiterbildung der Erfindung kann die Vorrichtung eine Basis umfassen., wobei

Gemäß einer weiteren Ausführungsform der erfindungsgemäßen Vorrichtung kann die Bearbeitungseinrichtung um die zweite Rotationsachse drehbar an der Basis angebracht sein. Insbesondere kann die Bearbeitungseinrichtung hierzu eine Halterung aufweisen, mittels der die Bearbeitungseinrichtung um die zweite Rotationsachse drehbar an der Basis befestigt ist.

In einer Weiterbildung der erfindungsgemäßen Vorrichtung kann die Schlittenanordnung zwei im wesentlichen senkrecht zueinander angeordnete Linearschlitten zur Verlagerung des Werkstückträgers entlang zueinander im wesentlichen senkrechter erster und zweiter Linearachsen aufweisen. Der Werkstückträger ist bei dieser Ausführungsform also zusammen mit der Schlittenanordnung um die zweite Rotationsachse drehbar an der Basis angebracht sein. Die Schlittenanordnung ist bei dieser Ausführungsvariante beispielsweise in Form eines X-Y-Tisches ausgebildet, der den Werkstückträger entlang der X- Linearachse und der Y- Linearachse verlagerbar trägt, wobei die Schlittenanordnung selbst um die zweie Rotationsachse drehbar ist.

Gemäß einer Ausführungsform der Erfindung kann die zweite Rotationsachse im Wesentlichen senkrecht zu der ersten Rotationsachse verlaufen. Erstreckt sich die zweite Rotationsachse beispielsweise senkrecht zu der Fläche der Oberseite der Basis, erstreckt sich die erste Rotationsachse im Wesentlichen parallel zu der Fläche der Oberseite der Basis.

In einer weiteren Ausführungsform der erfindungsgemäßen Vorrichtung kann die zweite Rotationsachse im Wesentlichen senkrecht zu der optischen Achse des hochenergetischen Bearbeitungsstrahls verlaufen. Erstreckt sich die zweite Rotationsachse beispielsweise senkrecht zu der Fläche der Oberseite der Basis, erstreckt sich die optische Achse des hochenergetischen Bearbeitungsstrahls im Wesentlichen parallel zu der Fläche der Oberseite der Basis.

Des Weiteren können die erste Rotationsachse und die optische Achse des hochenergetischen Bearbeitungsstrahls quer zueinander verlaufen. Der Winkel zwischen der ersten Rotationsachse und der optischen Achse des hochenergetischen Bearbeitungsstrahls kann nach Maßgabe der zu bearbeitenden Oberfläche des Werkstücks eingestellt und durch Drehen des Werkstückträgers und/oder der Bearbeitungseinrichtung um die zweite Rotationsachse während des Bearbeitens und/oder vor dem Bearbeiten veränderbar sein.

Gemäß einer Weiterbildung der erfindungsgemäßen Vorrichtung kann die erste Linearachse derart angeordnet sein, dass der Werkstückträger in Richtung einer Längsachse des Werkstückträgers verlagerbar ist. Ferner kann vorgesehen sein, dass die zweite Linearachse derart angeordnet ist, dass der Werkstückträger in Richtung einer quer, vorzugsweise senkrecht, zu der Längsachse verlaufenden Querachse des Werkstückträgers verlagerbar ist. Hierzu kann der Werkstückträger beispielsweise den oben genannten X-Y-Tisch umfassen. Über diesen X-Y-Tisch kann die Aufnahmeeinrichtung mit der Basis verbunden sein. Die Längsachse des Werkstückträgers kann beispielsweise der ersten Rotationsachse der Aufnahmeeinrichtung entsprechen. Die Vorrichtung kann dazu eingerichtet sein, den Werkstückträger und damit die Aufnahmeeinrichtung sowie das davon aufgenommene Werkstück ferner derart entlang der ersten und/oder zweiten Linearachse zu verlagern, dass die aktuelle Bearbeitungsposition während des Bearbeitens auf oder in unmittelbarer Nähe zu der zweiten Rotationsachse liegt. Das Verlagern des Werkstückträgers erfolgt nach Maßgabe des Drehens der Aufnahmeeinrichtung um die erste Rotationsachse und/oder des Werkstückträgers um die zweite Rotationsachse und/oder der Bearbeitungseinrichtung um die zweite Rotationsachse. Es versteht sich, dass alternativ die Aufnahmeeinrichtung auch ohne Verlagern des Werkstückträgers auf die vorstehend beschriebene Weise entlang der ersten und/oder zweiten Linearachse verlagerbar sein kann.

Das Verlagern des Werkstückträgers bzw. der Aufnahmeeinrichtung in Richtung der ersten und/oder zweiten Linearachse kann in einer Ausführungsform lediglich vor Beginn oder aber auch während des Bearbeitungsprozesses möglich sein, um die aktuelle Bearbeitungsposition auf oder in unmittelbarer Nähe zu der zweiten Rotationsachse festzulegen. In einzelnen Bearbeitungssituationen, in denen es ausreicht, den Werkstückträger entlang der ersten und/oder zweiten Linearachse bereits vor Beginn des Bearbeitungsprozesses hinreichend genau zu positionieren, kann es dann ausreichend sein, dasswährend des Bearbeitungsprozesses nur noch das Drehen der Aufnahmeeinrichtung um die erste Rotationsachse und/oder das Drehen des Werkstückträgers um die zweite Rotationsachse und/oder das Drehen der Bearbeitungseinrichtung um die zweite Rotationsachse zugelassen bzw. ausgeführt wird.

Gemäß einer Weiterbildung der erfindungsgemäßen Vorrichtung kann die Fokussiereinrichtung eine verlagerbare Fokuslinse umfassen, die im Strahlengang des hochenergetischen Bearbeitungsstrahls angeordnet und in Richtung der optischen Achse des hochenergetischen Bearbeitungsstrahls verlagerbar ist, um die Position des Brennpunkts des hochenergetischen Bearbeitungsstrahls anzupassen. Die Vorrichtung kann dazu eingerichtet sein, ferner die verlagerbare Fokuslinse derart zu verlagern, dass die aktuelle Bearbeitungsposition während des Bearbeitens auf oder in unmittelbarer Nähe zu der zweiten Rotationsachse liegt. Das Verlagern der verlagerbaren Fokuslinse erfolgt nach Maßgabe des Drehens der Aufnahmeeinrichtung um die erste Rotationsachse und/oder des Werkstückträgers um die zweite Rotationsachse und/oder der Bearbeitungseinrichtung um die zweite Rotationsachse.

Das Verlagern der Fokuslinse in Richtung der optischen Achse des hochenergetischen Bearbeitungsstrahls kann in einer Ausführungsform lediglich vor Beginn des Bearbeitungsprozesses möglich sein, um beispielsweise den Brennpunkt und somit die aktuelle Bearbeitungsposition auf oder in unmittelbarer Nähe zu der zweiten Rotationsachse festzulegen, sodass während des Bearbeitungsprozesses nur noch das Drehen der Aufnahmeeinrichtung um die erste Rotationsachse und/oder das Drehen des Werkstückträgers um die zweite Rotationsachse und/oder das Drehen der Bearbeitungseinrichtung um die zweite Rotationsachse zugelassen bzw. ausgeführt wird.

In einer Weiterbildung der erfindungsgemäßen Vorrichtung kann die Fokussiereinrichtung wenigstens eine verlagerbare Ablenkeinrichtung umfassen, die im Strahlengang des hochenergetischen Bearbeitungsstrahls angeordnet und dazu eingerichtet ist, den hochenergetischen Bearbeitungsstrahl abzulenken, um den Brennpunkt des hochenergetischen Bearbeitungsstrahls auf oder in unmittelbarer Nähe zu der zweiten Rotationsachse zu verlagern. Die Vorrichtung kann dazu eingerichtet sein, ferner die verlagerbare Ablenkeinrichtung derart zu verlagern, dass die aktuelle Bearbeitungsposition während des Bearbeitens auf oder in unmittelbarer Nähe zu der zweiten Rotationsachse liegt. Das Verlagern der wenigstens einen verlagerbaren Ablenkeinrichtung erfolgt nach Maßgabe des Drehens der Aufnahmeeinrichtung um die erste Rotationsachse und/oder des Werkstückträgers um die zweite Rotationsachse und/oder der Bearbeitungseinrichtung um die zweite Rotationsachse.

Das Verlagern der wenigstens einen verlagerbaren Ablenkeinrichtung zum Verlagern des Brennpunkts des hochenergetischen Bearbeitungsstrahls auf der zweiten Rotationsachse kann in einer Ausführungsform lediglich vor Beginn des Bearbeitungsprozesses möglich sein, um beispielsweise den Brennpunkt und somit die aktuelle Bearbeitungsposition auf oder in unmittelbarer Nähe zu der zweiten Rotationsachse festzulegen, sodass während des Bearbeitungsprozesses nur noch das Drehen der Aufnahmeeinrichtung um die erste Rotationsachse und/oder das Drehen des Werkstückträgers um die zweite Rotationsachse und/oder das Drehen der Bearbeitungseinrichtung um die zweite Rotationsachse zugelassen bzw. ausgeführt wird.

In einer weiteren erfindungsgemäßen Ausführungsform kann die wenigstens eine verlagerbare Ablenkeinrichtung eine quer zur optischen Achse des hochenergetischen Bearbeitungsstrahls verschiebbare Kollimationslinse, ein zweiachsiges Scannersystem, insbesondere einen um zwei Schwenkachsen schwenkbaren Galvanometerscanner, einen Polygonspiegel oder Ähnliches umfassen.

In einer Weiterbildung der erfindungsgemäßen Vorrichtung können der Werkstückträger und/oder die Bearbeitungseinrichtung relativ zueinander jeweils entlang einer weiteren Achse verlagerbar sein, die sich im Wesentlichen parallel zu der zweiten Rotationsachse erstreckt, und die im Wesentlichen senkrecht zu der ersten und/oder zweiten Linearachse verläuft. Mit anderen Worten können der Werkstückträger und/oder die Bearbeitungseinrichtung entlang einer Z-Achse höhenverstellbar sein. Das Verlagern des Werkstückträgers und/oder der Bearbeitungseinrichtung entlang der jeweiligen weiteren Achse erfolgt nach Maßgabe des Drehens der Aufnahmeeinrichtung um die erste Rotationsachse und/oder des Werkstückträgers um die zweite Rotationsachse und/oder der Bearbeitungseinrichtung um die zweite Rotationsachse.

Das Verlagern des Werkstückträgers und/oder der Bearbeitungseinrichtung entlang der jeweiligen weiteren Achse kann in einer Ausführungsform lediglich vor Beginn des Bearbeitungsprozesses möglich sein, um beispielsweise den Brennpunkt und somit die aktuelle Bearbeitungsposition auf oder in unmittelbarer Nähe zu der zweiten Rotationsachse festzulegen, sodass während des Bearbeitungsprozesses nur noch das Drehen der Aufnahmeeinrichtung um die erste Rotationsachse und/oder das Drehen des Werkstückträgers um die zweite Rotationsachse und/oder das Drehen der Bearbeitungseinrichtung um die zweite Rotationsachse zugelassen bzw. ausgeführt wird.

Es versteht sich, dass die erfindungsgemäße Vorrichtung wenigstens eine Steuereinrichtung umfassen kann, die den verschiedenen bewegbaren Komponenten der Vorrichtung zugeordnete Antriebseinrichtungen ansteuern kann, um die beschriebenen Bewegungen der Komponenten auszuführen.

Darüber hinaus betrifft die Erfindung ein Verfahren zum Bearbeiten eines Werkstücks mittels eines hochenergetischen Bearbeitungsstrahls, vorzugsweise eines mit Schneiden besetzten Werkstücks mittels eines Laserstrahls, wobei das Verfahren insbesondere mittels einer Vorrichtung der vorstehend beschriebenen Art ausgeführt wird. Das Verfahren umfasst die Schritte:
- Aufnehmen des Werkstücks in einer Aufnahmeeinrichtung eines Werkstückträgers, wobei die Aufnahmeeinrichtung mit dem darin aufgenommenen Werkstück vor und/oder während des Bearbeitens um eine erste Rotationsachse der Aufnahmeeinrichtung drehbar ist;
- Erzeugen des hochenergetischen Bearbeitungsstrahls mit einer Bearbeitungsstrahlquelle einer Bearbeitungseinrichtung; und
- Fokussieren des hochenergetischen Bearbeitungsstrahls in einem Brennpunkt mittels einer Fokussiereinrichtung der Bearbeitungseinrichtung.

In dem erfindungsgemäßen Verfahren ist der Werkstückträger auf einer Schlittenanordnung mit wenigstens einem Linearschlitten angeordnet ist, wobei der Werkstückträger über die Schlittenanordnung relativ zur Basis entlang wenigstens einer dem Linearschlitten zugeordneten Linearachse verlagerbar ist. Ferner sind der Werkstückträger mit der diesem zugeordneten Schlittenanordnung und die Bearbeitungseinrichtung relativ zueinander um eine zweite Rotationsachse drehbar, die quer zu der ersten Rotationsachse und quer zu einer optischen Achse des hochenergetischen Bearbeitungsstrahls verläuft. Ferner werden in Abhängigkeit voneinander die Aufnahmeeinrichtung derart um die erste Rotationsachse gedreht und/oder der Werkstückträger derart um die zweite Rotationsachse gedreht und/oder die Bearbeitungseinrichtung derart um die zweite Rotationsachse gedreht, dass eine aktuelle Bearbeitungsposition, in der sich der Brennpunkt des hochenergetischen Bearbeitungsstrahls auf oder nahe einer zu bearbeitenden Oberfläche des Werkstücks befindet, während des Bearbeitens auf oder in unmittelbarer Nähe zu der zweiten Rotationsachse liegt.

Obgleich einige Aspekte und Merkmale lediglich in Bezug auf die erfindungsgemäße Vorrichtung beschrieben worden sind, können diese entsprechend für Weiterbildungen des erfindungsgemäßen Verfahrens gelten.

Es versteht sich, dass der Gegenstand der Erfindung nicht auf die zuvor beschriebenen Ausführungsformen und Weiterbildungen beschränkt ist. Die beschriebenen Ausführungsformen, Weiterbildungen und Merkmale können vom Fachmann beliebig kombiniert werden, ohne dabei vom Gegenstand der Erfindung abzuweichen.

Bevorzugte Ausführungsformen der Erfindung werden nachfolgend anhand der beigefügten, schematischen Zeichnungen näher erläutert. Es stellen dar:
- Fig. 1: eine Übersichtsansicht eines Ausführungsbeispiels einer erfindungsgemäßen Vorrichtung;
- Fig. 2: eine Detailansicht der Vorrichtung aus Fig. 1 bei der Bearbeitung eines rechtsschneidenden Werkzeugs;
- Fig. 3: eine Detailansicht der Vorrichtung aus Fig. 1 bei der Bearbeitung eines rechtsschneidenden Werkzeugs;
- Fig. 4: eine vergrößerte Darstellung eines Ausschnitts aus Fig. 3 bezüglich der Bearbeitung des rechtsschneidenden Werkzeugs; und
- Fig. 5: eine vergrößerte Darstellung entsprechend Fig. 4, jedoch bezüglich einer Bearbeitung eines linksschneidenden Werkzeugs.

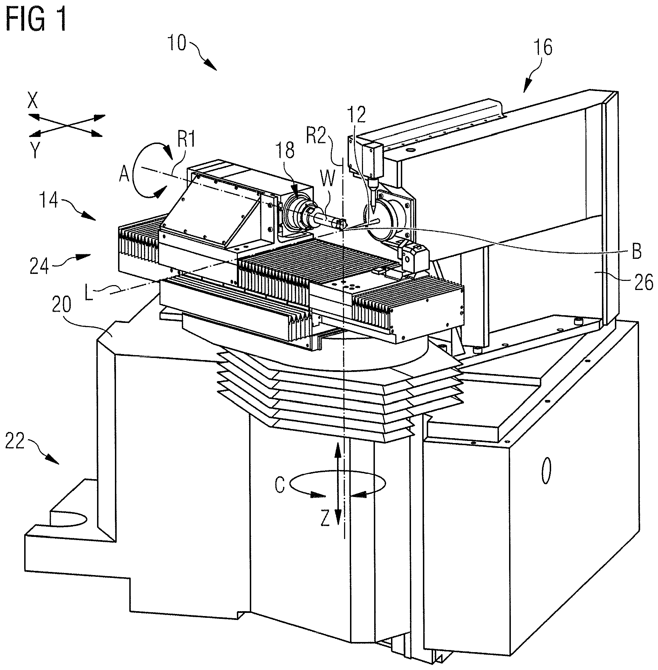

Figur 1 zeigt eine schematische Darstellung eines ersten Ausführungsbeispiels der erfindungsgemäßen Vorrichtung, die allgemein mit dem Bezugszeichen 10 bezeichnet ist. Die Vorrichtung 10 dient zur Bearbeitung eines mit Schneiden besetzten Werkstücks W mittels eines hochenergetischen Bearbeitungsstrahls, genauer gesagt eines Laserstrahls 12. In dem gezeigten Beispiel umfasst die Vorrichtung 10 einen Werkstückträger 14 und eine Bearbeitungseinrichtung 16.

Der Werkstückträger 14 weist eine Aufnahmeeinrichtung 18 auf, in der das Werkstück W aufgenommen ist. Die Aufnahmeeinrichtung 18 und das davon aufgenommene Werkstück W sind um eine erste Rotationsachse R1 drehbar, was in Figur 1 durch den Pfeil A angedeutet ist. Hierzu weist die Aufnahmeeinrichtung 18 eine von einer Steuereinrichtung ansteuerbare Antriebseinrichtung auf (nicht gezeigt). Die erste Rotationsachse R1 stellt gleichzeitig eine Rotationsachse des Werkstücks W sowie eine Längsachse des Werkstückträgers 14 dar.

Die Bearbeitungseinrichtung 16 ist mit einer Bearbeitungsstrahlquelle (einem Strahlerzeuger) zum Erzeugen des Laserstrahls 12 und einer Fokussiereinrichtung versehen, die den Laserstrahl 12 in einem Brennpunkt B auf einer zu bearbeitenden Oberfläche, also hier einer der Schneiden, des Werkstücks W fokussiert.

Der weitere Aufbau einer in dem Ausführungsbeispiel gezeigten Aufnahmeeinrichtung 18 und einer gezeigten Bearbeitungseinrichtung 16 sind dem Fachmann aus dem Stand der Technik hinlänglich bekannt, weshalb hier auf eine diesbezügliche detaillierte Beschreibung verzichtet wird.

Wie in Figur 1 zu erkennen und durch den Pfeil C angedeutet ist, sind der Werkstückträger 14 und die Bearbeitungseinrichtung 16 relativ zueinander um eine zweite Rotationsachse R2 drehbar. Diese zweite Rotationsachse R2 verläuft im Wesentlichen senkrecht zu der ersten Rotationsachse R1 und im Wesentlichen senkrecht zu einer optischen Achse des Laserstrahls 12. Ferner erstreckt sich die zweite Rotationsachse R2 im Wesentlichen senkrecht zu einer Oberfläche 20 einer Basis 22 der Vorrichtung 10. Über die Basis 22 stützt sich die Vorrichtung 10 gegenüber einem Untergrund ab. Alternativ kann die Basis 22 der Vorrichtung 10 auf einem Rahmen einer Anlage oder ähnlichem angebracht sein.

Die optische Achse L des Laserstrahls 12 und die erste Rotationsachse R1 verlaufen quer zueinander und sind in dem gezeigten Beispiel derart versetzt bzw. voneinander beabstandet, dass sie keinen gemeinsamen Schnittpunkt aufweisen. Der genaue Abstand zwischen der ersten Rotationsachse R1 und der optischen Achse des Laserstrahls 12 ist in Abhängigkeit der Geometrie und Dimensionen des zu bearbeitenden Werkstücks so gewählt, dass der Brennpunkt B des Laserstrahls 12 auf die zu bearbeitende Schneide des Werkstücks trifft.

Zum Ermöglichen einer Drehbewegung um die zweite Rotationsachse R2 ist der Werkstückträger 14 mittels eines X-Y-Tisches 24 drehbar an der Basis 22 der gezeigten Vorrichtung 10 mechanisch befestigt. Zudem ist die Bearbeitungseinrichtung 16 mittels einer Halterung 26 fest an der Basis 22 der Vorrichtung 10 mechanisch befestigt. Der X-Y-Tisch 24 ermöglicht ferner ein Verlagern des Werkstückträgers 14 und damit der Aufnahmeeinrichtung 18 sowie des davon aufgenommenen Werkstücks W in Richtung einer Längsachse des Werkstückträgers 14 und in Richtung einer quer zu der Längsachse verlaufenden Querachse des Werkstückträgers 14, was in Figur 1 durch die Pfeile X und Y angezeigt ist. Die Längsachse entspricht hier der ersten Rotationsachse R1 der Aufnahmeeinrichtung 18 bzw. des Werkstücks W.

Des Weiteren sind die Bearbeitungseinrichtung 16 und der Werkstückträger 14 (samt Aufnahmeeinrichtung 18 und davon aufgenommenem Werkstück W) relativ zueinander und relativ zu der Basis 22 in Richtung der zweiten Rotationsachse R2 verlagerbar ausgebildet. Mit anderen Worten ist in der dargestellten Ausführungsform der Werkstückträger 14 gegenüber der Basis 22 höhenverstellbar. Diese Verlagerbarkeit ist in Figur 1 durch den Pfeil Z dargestellt. Hierdurch kann beispielsweise der Abstand zwischen der ersten Rotationsachse R1 und der optischen Achse des Laserstrahls 12 eingestellt werden.

Die Vorrichtung 10 ist dazu eingerichtet, in Abhängigkeit voneinander die Aufnahmeeinrichtung 18 (und damit das zu bearbeitende Werkstück W) derart um die erste Rotationsachse R1 zu drehen und/oder den Werkstückträger 14 (und damit die Aufnahmeeinrichtung 18 und das Werkstück W) derart um die zweite Rotationsachse R2 zu drehen und/oder die Bearbeitungseinrichtung 16 derart um die zweite Rotationsachse R2 zu drehen, dass eine aktuelle Bearbeitungsposition, in der sich der Brennpunkt B des Laserstrahls 12 auf der zu bearbeitenden Schneide des Werkstücks W befindet, während des Bearbeitens auf oder in unmittelbarer Nähe zu der zweiten Rotationsachse R2 liegt. Vorzugsweise befindet sich die aktuelle Bearbeitungsposition und somit der Brennpunkt B des Laserstrahls 12 während des Bearbeitens stets auf der zweiten Rotationsachse R2.

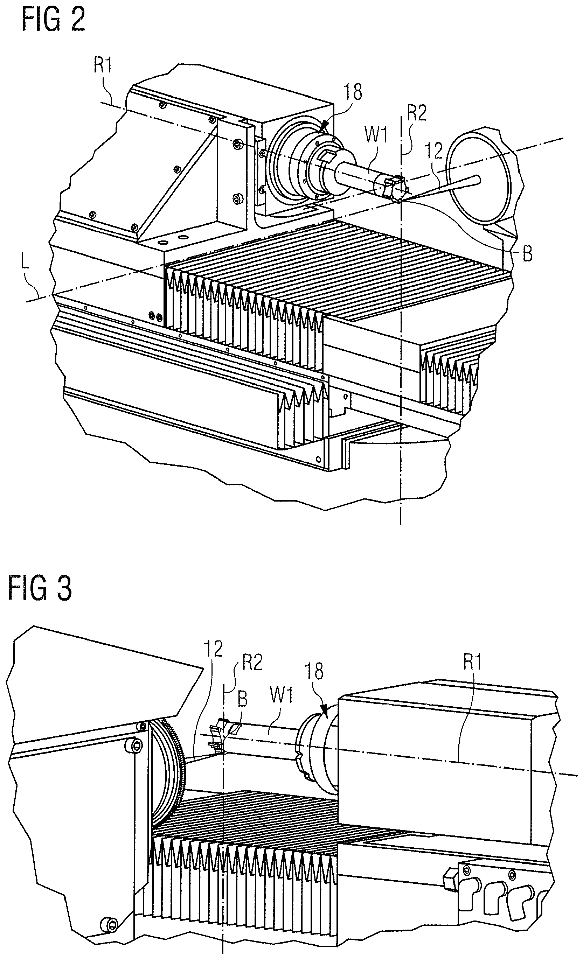

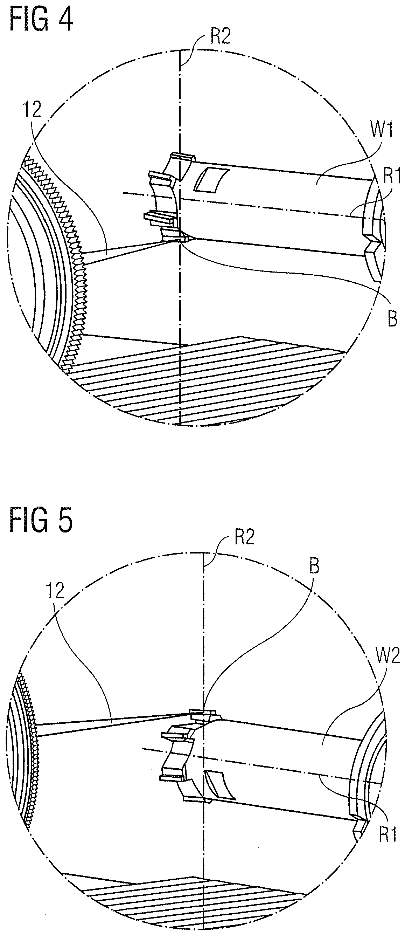

Eine derartige Bearbeitung des Werkstücks W mittels der erfindungsgemäßen Vorrichtung 10 ist in den Figuren 2 bis 4 im Detail dargestellt. Figuren 2 bis 4 zeigen hierzu die Bearbeitung eines rechtsschneidenden Werkzeugs W1. In Figur 4 ist zudem eine vergrößerte Darstellung eines Ausschnitts aus Figur 3 wiedergegeben.

Da bei der erfindungsgemäßen Bearbeitung mittels der Vorrichtung 10 die aktuelle Bearbeitungsposition und somit der Brennpunkt B des Laserstrahls 12 während des Bearbeitens stets auf oder zumindest in unmittelbarer Nähe der zweiten Rotationsachse R2 befindet, müssen lediglich Rotationsbewegungen der Komponenten der Vorrichtung 10 gesteuert werden. Genauer gesagt müssen lediglich die Bewegung Aufnahmeeinrichtung 18 um die erste Rotationsachse R1 und/oder die Bewegung des Werkstückträgers 14 und/oder der Bearbeitungseinrichtung 16 um die zweite Rotationsachse R2 gesteuert werden. Dies ermöglicht eine einfache und genaue Bewegungserzeugung zwischen Werkstück W und Laserstrahl 12, was die erreichbare Bearbeitungsqualität positiv beeinflusst. Je nach Bearbeitungssituation kann es jedoch erforderlich sein, zusätzlich die einzelnen Linearachsen zur Verlagerung entlang der Achsen X, Y und Z anzusteuern.

Bei dem gezeigten Ausführungsbeispiel der Erfindung wird ein Einstellen des Werkstückträgers 14 mittels des X-Y-Tisches 24 in x-Richtung und in y-Richtung sowie ein Höheneinstellen des Werkstückträgers 14 und der Bearbeitungseinrichtung 16 in z-Richtung vor Beginn oder während des Bearbeitungsprozesses ausgeführt. Kann in einer Bearbeitungssituation eine hinreichend exakte vor Positionierung entlang der Linearachsen erzielt werden, so kann es möglich sein, während des Bearbeitens lediglich eine Verlagerung um die Rotationsachsen R1 und R2 vorzunehmen, wobei die aktuelle Bearbeitungsposition stets auf oder in unmittelbarer Nähe zu der zweiten Rotationsachse R2 liegt. Es versteht sich jedoch, dass in alternativen Ausführungsformen zusätzlich auch ein Verlagern der Komponenten der Vorrichtung in x-, y- und z-Richtung während des Bearbeitens vorgenommen werden kann, um zu erreichen, dass die aktuelle Bearbeitungsposition stets auf oder in unmittelbarer Nähe zu der zweiten Rotationsachse R2 liegt.

Fig. 5 zeigt nun eine vergrößerte Ansicht entsprechend Figur 4, bei der man ein linksschneidendes Werkzeug W2 erkennt. Dabei ist das Werkzeug W2 derart über einen der Z-Achse zugeordneten Linearschlitten höhenverlagert worden, dass der Laserstrahl 12 mit seinem Brennpunkt B auf die zu bearbeitende Werkstückschneide trifft. Dabei liegt die Bearbeitungsposition oberhalb der Achse R1. Um eine optimale Positionierung des Brennpunkts B auf die zu bearbeitende Werkstückschneide zu erzielen, kann es ferner erforderlich gewesen sein, auch eine Verlagerung des Werkstücks W2 über den Werkstückträger entlang der X- und/oder Y-Achse vorzunehmen. Entsprechende Ansteuerungen der Achsen X, Y und Z, sowie der Rotationsachse R1 und R2 können in allen Bearbeitungssituationen auch während der Bearbeitung vorgenommen werden.

Aufgrund des beschriebenen Funktionsprinzips der erfindungsgemäßen Vorrichtung 10 kann in der in den Figuren gezeigten Ausführungsform auf zusätzliche bewegbare Umlenkspiegel oder sonstige verlagerbare optische Komponenten im Strahlengang des Laserstrahls 12 verzichtet werden. Dies kann eine Kosteneinsparung gegenüber herkömmlichen Laserbearbeitungsvorrichtungen des Standes der Technik ermöglichen.

Es versteht sich jedoch, dass in alternativen Ausführungsformen zusätzliche verlagerbare optische Komponenten zum Verlagern des Laserstrahls vorgesehen sein können. Diese können dazu dienen, den Laserstrahl vor Beginn des Bearbeitungsprozesses derart einzustellen, dass der Brennpunkt des Laserstrahls auf oder in unmittelbarer Nähe der zweiten Rotationsachse R2 liegt. Auch können solche zusätzlichen verlagerbaren optischen Komponenten in alternativen Ausführungsformen dazu dienen, den Laserstrahl während des Bearbeitens auf der zweiten Rotationsachse R2 in Z-Richtung zu verlagern.

## Patentansprüche

1. Vorrichtung (10) zum Bearbeiten eines Werkstücks (W) mittels eines hochenergetischen Bearbeitungsstrahls (12), insbesondere eines mit Schneiden besetzten Werkstücks mittels eines Laserstrahls, wobei die Vorrichtung (10) umfasst:
- eine Basis (22),
- einen Werkstückträger (14) mit einer Aufnahmeeinrichtung (18) zum Aufnehmen des Werkstücks (W), wobei die Aufnahmeeinrichtung (18) mit dem darin aufgenommenen Werkstück (W) um eine erste Rotationsachse (R1) der Aufnahmeeinrichtung (18) drehbar ist; und
- eine Bearbeitungseinrichtung (16) mit einer Bearbeitungsstrahlquelle zum Erzeugen des hochenergetischen Bearbeitungsstrahls (12) und einer Fokussiereinrichtung, um den hochenergetischen Bearbeitungsstrahl (12) in einem Brennpunkt (B) zu fokussieren;
wobei der Werkstückträger (14) auf einer Schlittenanordnung (24) mit wenigstens einem Linearschlitten angeordnet ist, wobei der Werkstückträger (14) über die Schlittenanordnung relativ zur Basis (22) entlang wenigstens einer dem Linearschlitten zugeordneten Linearachse (X, Y) verlagerbar ist,
**dadurch gekennzeichnet,**
**dass** der Werkstückträger (14) mit der diesem zugeordneten Schlittenanordnung (24) und die Bearbeitungseinrichtung (16) relativ zueinander um eine zweite Rotationsachse (R2) drehbar sind, die quer zu der ersten Rotationsachse (R1) und quer zu einer optischen Achse des hochenergetischen Bearbeitungsstrahls (12) verläuft, und dass
die Vorrichtung (10) dazu eingerichtet ist, in Abhängigkeit voneinander die Aufnahmeeinrichtung (18) derart um die erste Rotationsachse (R1) zu drehen und/oder den Werkstückträger (14) derart um die zweite Rotationsachse (R2) zu drehen und/oder die Bearbeitungseinrichtung (16) derart um die zweite Rotationsachse (R2) zu drehen, dass während des Bearbeitens eine aktuelle Bearbeitungsposition, in der sich der Brennpunkt (B) des hochenergetischen Bearbeitungsstrahls (12) auf oder nahe zu einer zu bearbeitenden Oberfläche des Werkstücks (W) befindet, auf oder in unmittelbarer Nähe zu der zweiten Rotationsachse (R2) liegt.

2. Vorrichtung (10) nach Anspruch 1, **dadurch gekennzeichnet, dass** sich die zweite Rotationsachse (R2) senkrecht zu einer Fläche einer Oberseite (20) der Basis (22) erstreckt.

3. Vorrichtung (10) nach Anspruch 1 oder 2, **dadurch gekennzeichnet, dass** die Bearbeitungseinrichtung (16) um die zweite Rotationsachse (R2) drehbar an der Basis (22) angebracht ist, vorzugsweise mittels einer Halterung (26).

4. Vorrichtung (10) nach einem der Ansprüche 1 bis 3, **dadurch gekennzeichnet, dass** die Schlittenanordnung (24) zwei im wesentlichen senkrecht zueinander angeordnete Linearschlitten zur Verlagerung des Werkstückträgers (14) entlang zueinander im wesentlichen senkrechter erster und zweiter Linearachsen (X, Y) aufweist.

5. Vorrichtung (10) nach einem der vorangehenden Ansprüche, **dadurch gekennzeichnet, dass** die zweite Rotationsachse (R2) im Wesentlichen senkrecht zu der ersten Rotationsachse (R1) verläuft.

6. Vorrichtung (10) nach einem der vorangehenden Ansprüche, **dadurch gekennzeichnet, dass** die zweite Rotationsachse (R2) im Wesentlichen senkrecht zu der optischen Achse des hochenergetischen Bearbeitungsstrahls (12) verläuft.

7. Vorrichtung (10) nach einem der vorangehenden Ansprüche, **dadurch gekennzeichnet, dass** die erste Linearachse (X) derart angeordnet ist, dass der Werkstückträger (14) in Richtung einer Längsachse des Werkstückträgers (14) verlagerbar ist, und dass die zweite Linearachse (Y) derart angeordnet ist, dass der Werkstückträger in Richtung einer quer zu der Längsachse verlaufenden Querachse des Werkstückträgers (14) verlagerbar ist, wobei die Längsachse des Werkstückträgers (14) vorzugsweise der ersten Rotationsachse (R1) der Aufnahmeeinrichtung (18) entspricht, und wobei die Vorrichtung (10) dazu eingerichtet ist, den Werkstückträger (14) ferner derart entlang der ersten und zweiten Linearachse (X, Y) zu verlagern, dass die aktuelle Bearbeitungsposition während des Bearbeitens auf oder in unmittelbarer Nähe zu der zweiten Rotationsachse (R2) liegt.

8. Vorrichtung (10) nach einem der vorangehenden Ansprüche, **dadurch gekennzeichnet, dass** die Fokussiereinrichtung eine verlagerbare Fokuslinse umfasst, die im Strahlengang des hochenergetischen Bearbeitungsstrahls (12) angeordnet und in Richtung der optischen Achse des hochenergetischen Bearbeitungsstrahls (12) verlagerbar ist, um die Position des Brennpunkts (B) des hochenergetischen Bearbeitungsstrahls (12) einzustellen, wobei die Vorrichtung (10) dazu eingerichtet ist, ferner die verlagerbare Fokuslinse derart zu verlagern, dass die aktuelle Bearbeitungsposition während des Bearbeitens auf oder in unmittelbarer Nähe zu der zweiten Rotationsachse (R2) liegt.

9. Vorrichtung (10) nach einem der vorangehenden Ansprüche, **dadurch gekennzeichnet, dass** die Fokussiereinrichtung wenigstens eine verlagerbare Ablenkeinrichtung umfasst, die im Strahlengang des hochenergetischen Bearbeitungsstrahls (12) angeordnet und dazu eingerichtet ist, den hochenergetischen Bearbeitungsstrahl (12) abzulenken, um den Brennpunkt (B) des hochenergetischen Bearbeitungsstrahls (12) auf der zweiten Rotationsachse (R2) zu verlagern, wobei die Vorrichtung (10) dazu eingerichtet ist, ferner die verlagerbare Ablenkeinrichtung derart zu verlagern, dass die aktuelle Bearbeitungsposition während des Bearbeitens auf oder in unmittelbarer Nähe zu der zweiten Rotationsachse (R2) liegt.

10. Vorrichtung (10) nach Anspruch 9, **dadurch gekennzeichnet, dass** die wenigstens eine verlagerbare Ablenkeinrichtung eine quer zur optischen Achse des hochenergetischen Bearbeitungsstrahls (12) verschiebbare Kollimationslinse, ein zweiachsiges Scannersystem, insbesondere einen um zwei Schwenkachsen schwenkbaren Galvanometerscanner, einen Polygonspiegel oder Ähnliches umfasst.

11. Vorrichtung (10) nach einem der vorangehenden Ansprüche, **dadurch gekennzeichnet, dass** der Werkstückträger (14) und/oder die Bearbeitungseinrichtung (16) relativ zueinander jeweils entlang einer weiteren Achse (Z) verlagerbar sind, die sich im Wesentlichen parallel zu der zweiten Rotationsachse (R2) erstreckt und im Wesentlichen senkrecht zu der ersten und zweiten Linearachse (X, Y) verläuft.

12. Verfahren zum Bearbeiten eines Werkstücks (W) mittels eines hochenergetischen Bearbeitungsstrahls (12), vorzugsweise eines mit Schneiden besetzten Werkstücks mittels eines Laserstrahls, wobei das Verfahren insbesondere mittels einer Vorrichtung (10) nach einem der vorangehenden Ansprüche ausgeführt wird, wobei das Verfahren die Schritte umfasst:
- Aufnehmen des Werkstücks (W) in einer Aufnahmeeinrichtung (18) eines Werkstückträgers (14), wobei die Aufnahmeeinrichtung (18) mit dem darin aufgenommenen Werkstück (W) vor und/oder während des Bearbeitens um eine erste Rotationsachse (R1) der Aufnahmeeinrichtung (18) drehbar ist;
- Erzeugen des hochenergetischen Bearbeitungsstrahls (12) mit einer Bearbeitungsstrahlquelle einer Bearbeitungseinrichtung (16); und
- Fokussieren des hochenergetischen Bearbeitungsstrahls (12) in einem Brennpunkt (B) mittels einer Fokussiereinrichtung der Bearbeitungseinrichtung (16);
wobei der Werkstückträger (14) auf einer Schlittenanordnung (24) mit wenigstens einem Linearschlitten angeordnet ist, wobei der Werkstückträger (14) über die Schlittenanordnung relativ zur Basis (22) entlang wenigstens einer dem Linearschlitten zugeordneten Linearachse (X, Y) verlagerbar ist,
**dadurch gekennzeichnet,**
**dass** der Werkstückträger (14) mit der diesem zugeordneten Schlittenanordnung (24) und die Bearbeitungseinrichtung (16) relativ zueinander um eine zweite Rotationsachse (R2) drehbar sind, die quer zu der ersten Rotationsachse (R1) und quer zu einer optischen Achse des hochenergetischen Bearbeitungsstrahls (12) verläuft, und dass
in Abhängigkeit voneinander die Aufnahmeeinrichtung (18) derart um die erste Rotationsachse (R1) gedreht und/oder der Werkstückträger (14) derart um die zweite Rotationsachse (R2) gedreht und/oder die Bearbeitungseinrichtung (16) derart um die zweite Rotationsachse (R2) gedreht werden, dass eine aktuelle Bearbeitungsposition, in der sich der Brennpunkt (B) des hochenergetischen Bearbeitungsstrahls (12) auf oder nahe einer zu bearbeitenden Oberfläche des Werkstücks (W) befindet, während des Bearbeitens auf oder in unmittelbarer Nähe zu der zweiten Rotationsachse (R2) liegt.

## Claims

1. Device (10) for machining a workpiece (W) by means of a high-energy machining beam (12), in particular a workpiece equipped with cutting edges by means of a laser beam, the device (10) comprising:
- a base (22),
- a workpiece carrier (14) having a receiving device (18) for receiving the workpiece (W), wherein the receiving device (18) with the workpiece (W) received therein is rotatable around a first axis of rotation (R1) of the receiving device (18); and
- a machining device (16) having a machining beam source for generating the high-energy machining beam (12) and a focusing device for focusing the high-energy machining beam (12) at a focal point (B);
wherein the workpiece carrier (14) is arranged on a slide assembly (24) with at least one linear slide, wherein the workpiece carrier (14) is displaceable via the slide assembly relative to the base (22) along at least one linear axis (X, Y) that is associated with the linear slide,
**characterized in that**
the workpiece carrier (14) with the slide assembly (24) associated therewith and the machining device (16) are rotatable relative to one another around a second axis of rotation (R2) running transversely to the first axis of rotation (R1) and transversely to an optical axis of the high-energy machining beam (12), and **in that**
the device (10) is configured to rotate the receiving device (18) around the first axis of rotation (R1) and/or to rotate the workpiece carrier (14) around the second axis of rotation (R2) and/or to rotate the machining device (16) around the second axis of rotation (R2) in mutual interdependence in such a way that, during machining, a current machining position in which the focal point (B) of the high-energy machining beam (12) is located on or close to a surface of the workpiece (W) to be machined lies on or in the immediate vicinity of the second axis of rotation (R2).

2. Device (10) according to claim 1, **characterized in that** the second axis of rotation (R2) extends perpendicularly to a surface of an upper side (20) of the base (22).

3. Device (10) according to claim 1 or 2, **characterized in that** the machining device (16) is attached to the base (22), preferably by means of a support (26), in such a way that it rotates around the second axis of rotation (R2).

4. Device (10) according to any one of claims 1 to 3, **characterized in that** the slide assembly (24) comprises two linear slides arranged substantially perpendicular to each other for displacing the workpiece carrier (14) along first and second linear axes (X, Y) that are substantially perpendicular to each other.

5. Device (10) according to any one of the preceding claims, **characterized in that** the second axis of rotation (R2) is substantially perpendicular to the first axis of rotation (R1).

6. Device (10) according to any one of the preceding claims, **characterized in that** the second axis of rotation (R2) is substantially perpendicular to the optical axis of the high-energy machining beam (12).

7. Device (10) according to any one of the preceding claims, **characterized in that** the first linear axis (X) is arranged in such a way that the workpiece carrier (14) is displaceable in the direction of a longitudinal axis of the workpiece carrier (14), and **in that** the second linear axis (Y) is arranged in such a way that the workpiece carrier is displaceable in the direction of a transverse axis of the workpiece carrier (14) running transversely to the longitudinal axis, wherein the longitudinal axis of the workpiece carrier (14) preferably corresponds to the first axis of rotation (R1) of the receiving device (18), and wherein the device (10) is configured to further displace the workpiece carrier (14) along the first and second linear axes (X, Y) in such a way that, during machining, the current machining position lies on or in the immediate vicinity of the second axis of rotation (R2).

8. Device (10) according to any one of the preceding claims, **characterized in that** the focusing device comprises a displaceable focus lens that is arranged in the beam path of the high-energy machining beam (12) and displaceable in the direction of the optical axis of the high-energy machining beam (12) for adjusting the position of the focal point (B) of the high-energy machining beam (12), wherein the device (10) is configured to further displace the displaceable focus lens in such a way that, during machining, the current machining position lies on or in the immediate vicinity of the second axis of rotation (R2).

9. Device (10) according to any one of the preceding claims, **characterized in that** the focusing device comprises at least one displaceable deflecting device that is arranged in the beam path of the high-energy machining beam (12) and configured to deflect the high-energy machining beam (12) in order to displace the focal point (B) of the high-energy machining beam (12) on the second axis of rotation (R2), wherein the device (10) is configured to further displace the displaceable deflecting device in such a way that, during machining, the current machining position lies on or in the immediate vicinity of the second axis of rotation (R2).

10. Device (10) according to claim 9, **characterized in that** the at least one displaceable deflection device comprises a collimating lens that is displaceable transversely to the optical axis of the high-energy machining beam (12), a two-axis scanner system, in particular a galvanometer scanner that pivots around two pivot axes, a polygon mirror or similar.

11. Device (10) according to any one of the preceding claims, **characterized in that** the workpiece carrier (14) and/or the machining device (16) are displaceable relative to each other along an additional axis (Z) that extends substantially parallel to the second axis of rotation (R2) and is substantially perpendicular to the first and second linear axes (X, Y).

12. Method for machining a workpiece (W) by means of a high-energy machining beam (12), preferably a workpiece equipped with cutting edges by means of a laser beam, the method being carried out in particular by means of a device (10) according to any one of the preceding claims, wherein the method comprises the following steps:
- receiving the workpiece (W) in a receiving device (18) of a workpiece carrier (14), wherein the receiving device (18) with the workpiece (W) received therein is rotatable around a first axis of rotation (R1) of the receiving device (18) before and/or during machining;
- generating the high-energy machining beam (12) by means of a machining beam source of a machining device (16); and
- focusing the high-energy machining beam (12) at a focal point (B) by means of a focusing device of the machining device (16);
wherein the workpiece carrier (14) is arranged on a slide assembly (24) with at least one linear slide, wherein the workpiece carrier (14) is displaceable via the slide assembly relative to the base (22) along at least one linear axis (X, Y) that is associated with the linear slide,
**characterized in**
**that** the workpiece carrier (14) with the slide assembly (24) associated therewith and the machining device (16) are rotatable relative to one another around a second axis of rotation (R2) running transversely to the first axis of rotation (R1) and transversely to an optical axis of the high-energy machining beam (12), and in that in mutual interdependence, the receiving device (18) is rotated around the first axis of rotation (R1) and/or the workpiece carrier (14) is rotated around the second axis of rotation (R2) and/or the machining device (16) is rotated around the second axis of rotation (R2) in such a way that, during machining, a current machining position in which the focal point (B) of the high-energy machining beam (12) is located on or close to a surface of the workpiece (W) to be machined lies on or in the immediate vicinity of the second axis of rotation (R2).

## Revendications

1. Dispositif (10) pour l'usinage d'une pièce (W) au moyen d'un faisceau d'usinage à haute énergie (12), en particulier d'une pièce munie d'arêtes de coupe au moyen d'un faisceau laser, le dispositif (10) comprenant :
- une base (22),
- un porte-pièce (14) avec un moyen de réception (18) pour recevoir la pièce (W), le moyen de réception (18) pouvant tourner avec la pièce (W) qui y est reçue autour d'un premier axe de rotation (R1) du moyen de réception (18) ; et
- un moyen d'usinage (16) avec une source de faisceau d'usinage pour générer le faisceau d'usinage à haute énergie (12) et un moyen de focalisation pour focaliser le faisceau d'usinage à haute énergie (12) en un foyer (B) ;
dans lequel le porte-pièce (14) est disposé sur un ensemble chariot (24) comprenant au moins un chariot linéaire, le porte-pièce (14) pouvant être déplacé par l'ensemble chariot par rapport à la base (22) le long d'au moins un axe linéaire (X, Y) associé au chariot linéaire,
**caractérisé en ce que**
le porte-pièce (14) avec l'ensemble chariot (24) qui lui est associé et le moyen d'usinage (16) peuvent tourner l'un par rapport à l'autre autour d'un deuxième axe de rotation (R2) qui s'étend transversalement au premier axe de rotation (R1) et transversalement à un axe optique du faisceau d'usinage à haute énergie (12), et **en ce que**
le dispositif (10) est conçu pour faire tourner le moyen de réception (18) autour du premier axe de rotation (R1) et/ou faire tourner le porte-pièce (14) autour du deuxième axe de rotation (R2) et/ou faire tourner le moyen d'usinage (16) autour du deuxième axe de rotation (R2), en fonction les uns des autres, de telle sorte qu'une position d'usinage actuelle, dans laquelle le foyer (B) du faisceau d'usinage à haute énergie (12) se trouve sur ou à proximité d'une surface à usiner de la pièce (W), se situe sur ou à proximité immédiate du deuxième axe de rotation (R2) pendant l'usinage.

2. Dispositif (10) selon la revendication 1, **caractérisé en ce que** le deuxième axe de rotation (R2) s'étend perpendiculairement à une surface d'une face supérieure (20) de la base (22).

3. Dispositif (10) selon la revendication 1 ou 2, **caractérisé en ce que** le moyen d'usinage (16) est monté sur la base (22), de préférence au moyen d'un support (26), de manière à pouvoir tourner autour du deuxième axe de rotation (R2).

4. Dispositif (10) selon l'une des revendications 1 à 3, **caractérisé en ce que** l'ensemble chariot (24) comprend deux chariots linéaires disposés sensiblement perpendiculairement l'un à l'autre pour déplacer le porte-pièce (14) le long de premier et deuxième axes linéaires (X, Y) sensiblement perpendiculaires l'un à l'autre.

5. Dispositif (10) selon l'une des revendications précédentes, **caractérisé en ce que** le deuxième axe de rotation (R2) est sensiblement perpendiculaire au premier axe de rotation (R1).

6. Dispositif (10) selon l'une des revendications précédentes, **caractérisé en ce que** le deuxième axe de rotation (R2) est sensiblement perpendiculaire à l'axe optique du faisceau d'usinage à haute énergie (12).

7. Dispositif (10) selon l'une des revendications précédentes, **caractérisé en ce que** le premier axe linéaire (X) est disposé de telle sorte que le porte-pièce (14) peut être déplacé suivant un axe longitudinal du porte-pièce (14), et **en ce que** le deuxième axe linéaire (Y) est disposé de telle sorte que le porte-pièce peut être déplacé selon un axe transversal du porte-pièce (14) s'étendant transversalement à l'axe longitudinal, l'axe longitudinal du porte-pièce (14) correspondant de préférence au premier axe de rotation (R1) du moyen de réception (18), et le dispositif (10) étant conçu pour déplacer en outre le porte-pièce (14) le long des premier et deuxième axes linéaires (X, Y) de telle sorte que la position d'usinage actuelle se situe sur ou à proximité immédiate du deuxième axe de rotation (R2) pendant l'usinage.

8. Dispositif (10) selon l'une des revendications précédentes, **caractérisé en ce que** le moyen de focalisation comprend une lentille de focalisation déplaçable, disposée sur le trajet du faisceau d'usinage à haute énergie (12) et déplaçable en direction de l'axe optique du faisceau d'usinage à haute énergie (12), pour régler la position du foyer (B) du faisceau d'usinage à haute énergie (12), le dispositif (10) étant conçu pour déplacer en outre la lentille de focalisation déplaçable de telle sorte que la position d'usinage actuelle se situe sur ou à proximité immédiate du deuxième axe de rotation (R2) pendant l'usinage.

9. Dispositif (10) selon l'une des revendications précédentes, **caractérisé en ce que** le moyen de focalisation comprend au moins un moyen de déviation déplaçable disposé sur le trajet du faisceau d'usinage à haute énergie (12) et conçu pour dévier le faisceau d'usinage à haute énergie (12), pour déplacer le foyer (B) du faisceau d'usinage à haute énergie (12) sur le deuxième axe de rotation (R2), le dispositif (10) étant conçu pour déplacer en outre le moyen de déviation déplaçable de telle sorte que la position d'usinage actuelle se situe sur ou à proximité immédiate du deuxième axe de rotation (R2) pendant l'usinage.

10. Dispositif (10) selon la revendication 9, **caractérisé en ce que** ledit au moins un moyen de déviation déplaçable comprend une lentille de collimation déplaçable transversalement à l'axe optique du faisceau d'usinage à haute énergie (12), un système de balayage à deux axes, en particulier un scanner galvanométrique pouvant pivoter autour de deux axes de pivotement, un miroir polygonal ou analogue.

11. Dispositif (10) selon l'une des revendications précédentes, **caractérisé en ce que** le porte-pièce (14) et/ou le moyen d'usinage (16) peuvent être déplacés l'un par rapport à l'autre le long d'un autre axe (Z) qui s'étend sensiblement parallèlement au deuxième axe de rotation (R2) et qui est sensiblement perpendiculaire aux premier et deuxième axes linéaires (X, Y).

12. Procédé pour l'usinage d'une pièce (W) au moyen d'un faisceau d'usinage à haute énergie (12), de préférence d'une pièce munie d'arêtes de coupe au moyen d'un faisceau laser, le procédé étant mis en oeuvre en particulier au moyen d'un dispositif (10) selon l'une des revendications précédentes, le procédé comprenant les étapes de :
- réception de la pièce (W) dans un moyen de réception (18) d'un porte-pièce (14), le moyen de réception (18) pouvant tourner avec la pièce (W) qui y est reçue autour d'un premier axe de rotation (R1) du moyen de réception (18) avant et/ou pendant l'usinage ;
- génération du faisceau d'usinage à haute énergie (12) avec une source de faisceau d'usinage d'un moyen d'usinage (16) ; et
- focalisation du faisceau d'usinage à haute énergie (12) en un foyer (B) au moyen d'un moyen de focalisation du moyen d'usinage (16) ;
dans lequel le porte-pièce (14) est disposé sur un ensemble chariot (24) comprenant au moins un chariot linéaire, le porte-pièce (14) pouvant être déplacé par l'ensemble chariot par rapport à la base (22) le long d'au moins un axe linéaire (X, Y) associé au chariot linéaire,
**caractérisé en ce que**
le porte-pièce (14) avec l'ensemble chariot (24) qui lui est associé et le moyen d'usinage (16) peuvent tourner l'un par rapport à l'autre autour d'un deuxième axe de rotation (R2) qui s'étend transversalement au premier axe de rotation (R1) et transversalement à un axe optique du faisceau d'usinage à haute énergie (12), et **en ce que**,
le moyen de réception (18) peut tourner autour du premier axe de rotation (R1) et/ou le porte-pièce (14) peut tourner autour du deuxième axe de rotation (R2) et/ou le moyen d'usinage (16) peut tourner autour du deuxième axe de rotation (R2), en fonction les uns des autres, de telle sorte qu'une position d'usinage actuelle, dans laquelle le foyer (B) du faisceau d'usinage à haute énergie (12) se trouve sur ou à proximité d'une surface à usiner de la pièce (W), se situe sur ou à proximité immédiate du deuxième axe de rotation (R2) pendant l'usinage.
